# FASCICULE DE BREVET EUROPEEN

(11) **EP 1 502 829 B1**
(45) Date de publication et mention de la délivrance du brevet: **19.05.2010**
(21) Numéro de dépôt: 04103301.0
(22) Date de dépôt: 12.07.2004
(51) Int. Cl.: B60R 25/00

(54) **Dispositif de commande et antivol électronique pour véhicule automobile muni de ce dispositif**
Elektronische Steuer- und Diebstahlvorrichtung für ein Kraftfahrzeug mit dieser Vorrichtung
Electronic control and anti-theft apparatus for vehicle with that apparatus

(30) Priorité: 31.07.2003 FR 0309460
(43) Date de publication de la demande: 02.02.2005
(73) Titulaire: VALEO SECURITE HABITACLE S.A.S., 94042 Créteil Cédex (FR)
(72) Inventeur: Flandrinck, Christian c/o Valeo Securite Habitacle, 94042 Creteil (FR)
(74) Mandataire: Rosolen-Delarue, Katell

(56) Documents cités:
- EP-A- 0 893 315
- DE-A- 10 150 708
- DE-A- 19 957 046
- FR-A- 2 820 385
- US-B1- 6 539 762

## Description

La présente invention concerne un dispositif de commande et un antivol électronique pour véhicule automobile muni de ce dispositif.

On connaît déjà dans l'état de la technique selon le document DE 101 50 708 et le préambule de la revendication 1 un dispositif de commande pour véhicule automobile du type comprenant :
- un stator,
- un rotor monté déplaçable en rotation dans le stator, autour d'un axe géométrique lié à ce stator, entre une position de repos et une position opérationnelle,
- un organe amovible de manoeuvre du rotor, et
- des moyens de couplage en rotation de l'organe de manoeuvre avec le rotor par emboîtement de moyens mâles et femelles.

Un antivol électronique comporte habituellement un dispositif électronique d'identification constitué notamment d'un identifiant électronique, porté par un utilisateur du véhicule autorisé, et d'une unité d'identification de cet utilisateur autorisé, embarquée à bord du véhicule. L'identifiant électronique peut avoir, par exemple, une forme générale de boîtier plat.

Un antivol électronique comporte également un dispositif de commande du type ci-dessus destiné à commander manuellement le démarrage d'un moteur du véhicule et, le cas échéant, le verrouillage d'une colonne de direction du véhicule. Le rotor du dispositif de commande est couplé à un commutateur électrique à plusieurs positions. Ce commutateur permet de commander le démarrage du moteur. En effet, le rotor peut être placé, grâ ce à l'organe de manoeuvre amovible, successivement dans une position angulaire de repos, dite position "stop", et des positions angulaires opérationnelles, notamment une position "marche" et une position "démarrage". Un tel antivol est décrit dans le document DE 10150708 dans lequel l'identifiant électronique n'entre pas en contact avec le dispositif de commande.

L'organe de manoeuvre amovible est constitué habituellement par une clé munie d'un panneton ou insert formant des moyens de couplage mâles destinés à être emboîtés dans des moyens de couplage femelles ménagés dans le rotor.

L'invention a notamment pour but d'utiliser l'identifiant électronique comme organe de manoeuvre du rotor, ceci en conservant, de préférence, la forme générale de boîtier plat de cet organe de manoeuvre.

A cet effet, l'invention a pour objet un dispositif de commande du type précit é, présentant les caractéristiques revendiquées dans la revendication 1.

Grâce à l'invention, la forme générale de l'organe de manoeuvre, notamment la forme générale de boîtier plat, peut être conservée sans que les moyens de couplage avec le rotor soient visibles par l'utilisateur.

Suivant d'autres caractéristiques optionnelles de ce dispositif de commande
- le dispositif comprend des moyens de blocage des moyens mâles et femelles en position emboîtée destinés à être activés lorsque le rotor est
- le dispositif comprend des moyens de blocage des moyens mâles et femelles en position emboîtée destinés à être activés lorsque le rotor est en position opérationnelle, ces moyens de blocage étant agencés, au moins en partie, dans les moyens de couplage mâles et femelles ;
- les moyens de blocage comprennent au moins un levier de blocage, monté articulé dans le rotor, comprenant une première extrémité déplaçable entre une position escamotée dans les moyens de couplage mâles et une position de blocage dans laquelle elle coopère avec une butée de blocage ménagée dans les moyens de couplage femelles ;
- la première extrémité du levier de blocage est sollicitée par une force de rappel élastique en position de blocage, ce levier de blocage comprenant une seconde extrémité munie d'un profil destiné, lorsque le rotor est dans sa position de repos, à coopérer avec un profil fixe d'escamotage ménagé dans le stator, de façon à maintenir la première extrémité du levier de blocage en position escamotée à l'encontre de sa force de rappel ;
- le rotor est déplaçable en translation dans le stator, sensiblement parallèlement à l'axe de rotation du rotor, entre des positions d'attente et enfoncée, la seconde extrémité du levier de blocage étant, lorsque le rotor est en position enfoncée, espacée axialement du profil fixe d'escamotage, de façon que la première extrémité du levier de blocage est maintenue en position de blocage sous l'effet de sa force de rappel ;
- le dispositif comprend de plus des moyens d'immobilisation en translation du rotor en position enfoncée opérationnelle ;
- le profil fixe d'escamotage ménagé dans le stator comprend une rampe fixe d'escamotage et un palier fixe d'escamotage coopérant successivement avec des formes complémentaires du profil de la seconde extrémité du levier lorsque le rotor se déplace en translation de sa position enfoncée vers sa position d'attente ;
- la première extrémité du levier de blocage est munie d'une rampe mobile d'escamotage destinée à coopérer avec une forme complémentaire de l'organe de manoeuvre lors de l'emboîtement des moyens de couplage mâles et femelles les uns dans les autres alors que le rotor est en position opérationnelle ;
- les moyens de couplage mâles comprennent une saillie prolongeant axialement le rotor, de section transversale sensiblement rectangulaire, dans laquelle est logée la première extrémité du levier de blocage, cette saillie axiale étant destinée à coopérer par emboîtement avec les moyens de couplage femelles de section transversale complémentaire ;
- le dispositif comprend deux leviers de blocage montés articulés dans le rotor, disposés sensiblement à 180° l'un de l'autre autour de l'axe de rotation du rotor.

L'invention a également pour objet un antivol électronique pour véhicule automobile, du type comprenant des moyens de commande de démarrage d'un moteur du véhicule, tel que revendiqué dans la revendication 11.

L'invention a encore pour objet un antivol électronique pour véhicule automobile, du type comprenant un dispositif électronique d'identification comportant un identifiant électronique, destiné à être porté par un utilisateur du véhicule autorisé, et une unité d'identification de cet utilisateur autorisé, embarquée à bord du véhicule, présentant les caractéristiques de la revendication 12.

L'invention sera mieux comprise à la lecture de la description qui va suivre, donnée uniquement à titre d'exemple et faite en se référant aux dessins annexés dans lesquels :
- les figures 1 à 3 sont des vues en perspective, avec des coupes partielles, d'un dispositif de commande selon l'invention, l'organe de manoeuvre n'étant représenté que sur les figures 2 et 3 ;
- la figure 4 est une vue schématique de moyens d'immobilisation en translation du rotor dans une position enfoncée opérationnelle.

On a représenté sur les figures un antivol électronique pour véhicule automobile selon l'invention, désigné par la référence générale 10.

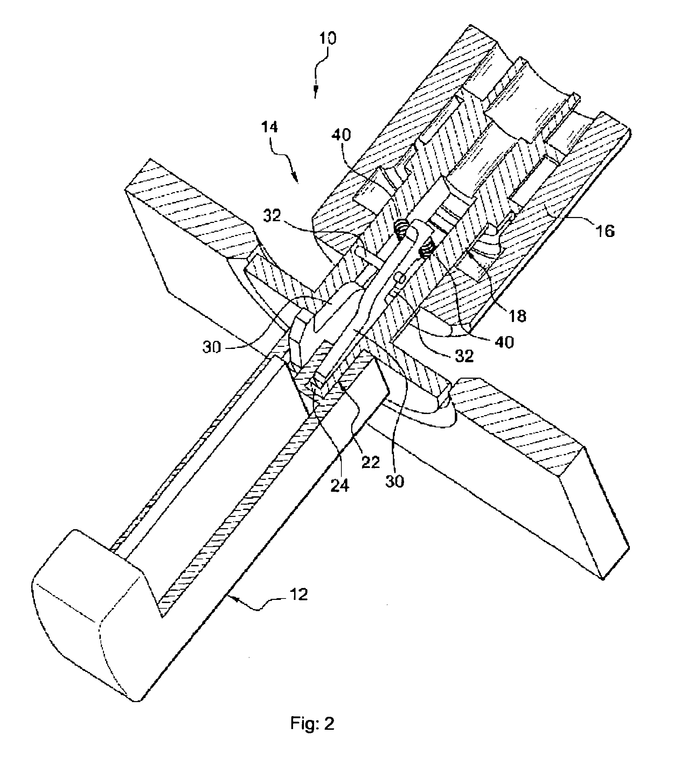

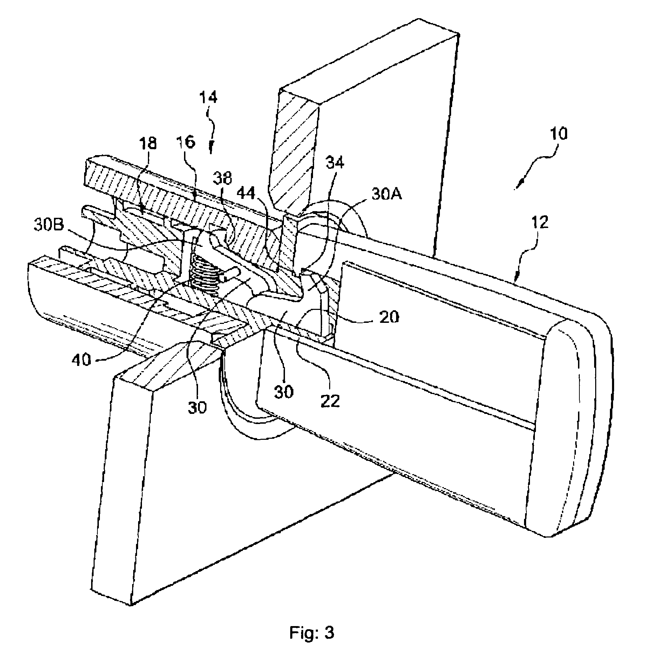

Cet antivol électronique comporte un dispositif électronique d'identification muni d'un identifiant électronique 12 (voir figures 2 et 3) destiné à être porté par un utilisateur du véhicule autorisé.

Par ailleurs, le dispositif électronique d'identification comporte une unité (non représentée sur les figures) d'identification d'un utilisateur autorisé, embarquée à bord du véhicule.

On notera que, dans l'exemple décrit, l'identifiant électronique 12 a une forme générale de boîtier plat.

Le cas échéant, l'identifiant électronique 12 comprend des moyens électroniques de commande d'organes du véhicule, notamment d'ouvrants de ce véhicule.

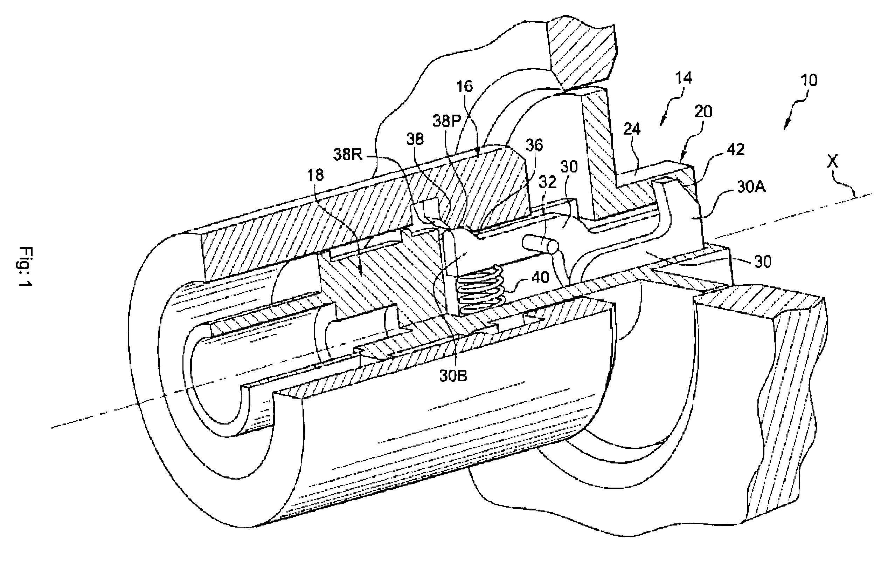

L'identifiant électronique 12 forme un organe de manoeuvre pour un dispositif de commande 14 selon l'invention représenté sur les figures 1 à 3. Ce dispositif 14 est destiné à commander manuellement le démarrage d'un moteur du véhicule et, le cas échéant, le verrouillage d'une colonne de direction de ce véhicule.

De façon classique, le dispositif de commande comprend un stator 16 et un rotor 18 monté déplaçable en rotation dans ce stator 16, autour d'un axe géométrique X lié à ce stator 16.

Le rotor 18 est déplaçable en rotation autour de l'axe X entre une position angulaire de repos, telle que représentée sur les figures 1 et 2, et au moins une position angulaire opérationnelle.

Le rotor 18 est couplé à un commutateur électronique à plusieurs positions, de type classique, non représenté sur les figures. Ce commutateur permet de commander le démarrage du moteur. Ainsi, le rotor 18 peut être placé dans sa position angulaire de repos, dite habituellement position "stop", et des positions angulaires opérationnelles dites habituellement position "marche" et position "démarrage".

L'identifiant 12 forme un organe amovible de manoeuvre du rotor 18. En effet, l'identifiant 12 est destiné à être couplé au rotor 18 à l'aide de moyens mâles 20 et femelles 22 coopérant entre eux par emboîtement axial.

En se référant en particulier aux figures 1 et 2, on voit que les moyens de couplage mâles 20 sont portés par le rotor 18 et les moyens de couplage femelles 22 sont portés par l'identifiant 12 formant organe de manoeuvre amovible.

De préférence, les moyens de couplage mâles 20 comprennent une saillie 24 prolongeant axialement le rotor 18. Cette saillie axiale 24, de section transversale sensiblement rectangulaire, est destinée à coopérer par emboîtement avec les moyens femelles 22 de section transversale complémentaire.

Le rotor 18 est également déplaçable en translation dans le stator 16, sensiblement parallèlement à l'axe X, entre une position d'attente telle que représentée sur les figures 1 et 2, et une position enfoncée telle que représentée sur la figure 3.

Le rotor 18 est rappelé élastiquement vers sa position d'attente à l'aide de moyens classiques non représentés.

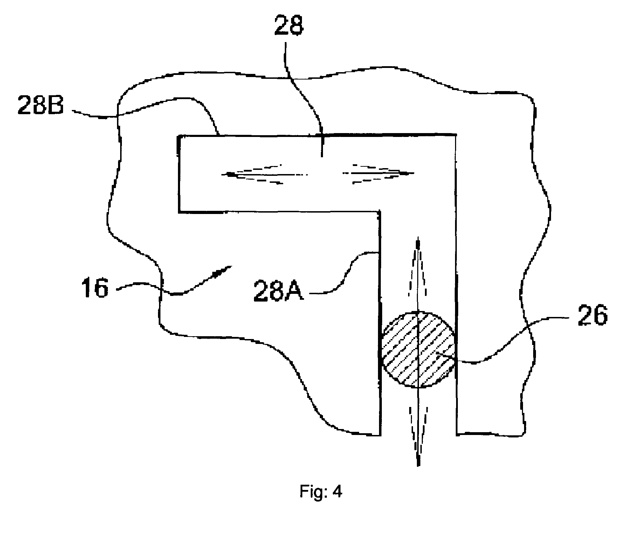

Conformément à un fonctionnement classique du dispositif de commande 14, les déplacements en translation et en rotation du rotor 18 s'effectuent successivement. Cette cinématique est imposée, par exemple, par des moyens représentés sur la figure 4 et comprenant un pion radial 26, porté par le rotor 18, monté coulissant dans un guide 28 ménagé dans la surface interne du stator 16. Le guide 28 comporte une première partie axiale 28A destinée à coopérer avec le pion 26 pour autoriser, lorsque le rotor 18 est en position "stop", des déplacements en translation du rotor18 entre ses positions d'attente et enfoncée. Par ailleurs, le guide 28 comporte une seconde partie angulaire 28B, prolongeant la première partie 28A, destinée à coopérer avec le pion 26 pour immobiliser en translation le rotor 18 dans chacune des positions enfoncées opérationnelles.

Pour éviter le découplage intempestif de l'identifiant 12 d'avec le rotor 18 lorsque ce dernier est dans une position opérationnelle (c'est-à-dire une position décalée angulairement par rapport à sa position de "repos"), le dispositif de commande 14 comprend des moyens de blocage des moyens mâles 20 et femelles 22 en position emboîtée. Ces moyens de blocage sont destinés à être activés lorsque le rotor 18 est en position opérationnelle.

Comme cela ressortira plus clairement de ce qui suit, les moyens de blocage sont agencés, au moins en partie, dans les moyens de couplage mâles 20 et femelles 22.

Dans l'exemple représenté sur les figures 1 à 3, on voit que les moyens de blocage comprennent deux leviers de blocage 30 montés articulés dans le rotor 18 aux moyens de broches 32 matérialisant des axes géométriques, liés au rotor 18, sensiblement orthogonaux à l'axe X de rotation du rotor 18.

On notera que les deux leviers de blocage 30, sensiblement identiques, sont disposés sensiblement à 180° l'un de l'autre autour de l'axe X de façon que leurs débattements soient antagoniques.

En variante, les moyens de blocage pourraient ne comporter qu'un seul levier de blocage 30.

Dans ce qui suit, on ne décrira qu'un seul de ces leviers de blocage 30.

Le levier de blocage 30 comporte une première extrémité 30A déplaçable entre une position escamotée dans la saillie axiale 24, comme cela est représenté sur la figure 1, et une position de blocage, comme cela est représenté sur la figure 2. Dans cette position de blocage, la première extrémité 30A du levier coopère avec une butée de blocage 34 ménagée dans une paroi interne de l'identifiant 12 délimitant les moyens de couplage femelles 22.

Le levier de blocage 30 comprend une seconde extrémité 30B munie d'un profil 36 destiné, lorsque le rotor 18 est dans sa position de repos telle que représentée sur la figure 1, à coopérer avec un profil fixe d'escamotage 38 ménagé dans le stator 16.

Le levier de blocage 30 est rappelé élastiquement, par exemple par un ressort de poussée 40, vers une position correspondant à la position de blocage de la première extrémité 30A du levier. La coopération des profils complémentaires 36, 38 permet de maintenir la première extrémité 30A du levier de blocage en position escamotée, à l'encontre de la force de rappel du ressort 40, comme cela est représenté sur la figure1.

Lorsque le rotor 18 est en position enfoncée, comme cela est représenté sur la figure 3, la seconde extrémité 30B du levier de blocage est espacée axialement du profil fixe d'escamotage 38, de façon que la première extrémité 30A du levier de blocage soit maintenue en position de blocage sous l'effet de la force de rappel du ressort 40.

On notera, en considérant notamment la figure 1, que le profil fixe d'escamotage 38 comprend une rampe fixe 38R prolongée axialement par un palier fixe 38P, sensiblement parallèle à l'axe X. Ces rampe 38R et palier 38P d'escamotage sont destinés à coopérer successivement avec des formes complémentaires du profil 36 de la seconde extrémité 30B du levier de blocage lorsque le rotor 18 se déplace en translation de sa position enfoncée, telle que représentée sur la figure 3, vers sa position d'attente, telle que représentée sur la figure 1.

On décrira ci-dessous les principaux aspects du fonctionnement du dispositif de commande 14 liés à l'invention.

Initialement, le rotor 18 est dans la position "stop" représentée sur la figure 1 dans laquelle il est placé en translation en position d'attente et en rotation en position de repos. La première extrémité 30A de chaque levier de blocage 30 est escamotée dans la saillie axiale 24 du rotor.

Un utilisateur souhaitant manoeuvrer le rotor 18, emboîte les moyens de couplage femelles 22 de l'identifiant 12 sur la saillie axiale 24 du rotor 18. L'identifiant 12 est alors couplé en rotation avec le rotor 18, comme cela est représenté sur la figure 2.

L'utilisateur exerce ensuite une poussée sur l'identifiant 12 qui est transmise au rotor 18 de façon à le déplacer en translation, parallèlement à l'axe X, vers sa position enfoncée telle que représentée sur la figure 3.

Ceci a pour effet d'écarter la seconde extrémité 30B des leviers de blocage des profils fixes d'escamotage correspondants 38. Les premières extrémités 30A des leviers de blocage, sollicitées chacune en position de blocage par le ressort de rappel 40, coopèrent avec les butées de blocage 34 de façon à retenir l'identifiant 12 emboîté sur la saillie axiale 24 du rotor 18.

Enfin, l'utilisateur tourne le rotor autour de l'axe X de façon à l'amener dans une position angulaire opérationnelle dans laquelle le rotor 18 est maintenu en position enfoncée par la seconde partie 28B du guide 28.

Dans cette position du rotor 18, les leviers de blocage 30 empêchent toute séparation de l'identifiant 12 d'avec le rotor 18. En effet, une traction exercée sur l'identifiant 12 dans un sens tendant à l'écarter axialement du rotor 18 a pour effet de maintenir les premières extrémités 30A des leviers en appui bloquant contre les butées correspondantes 34 de l'identifiant 12. L'escamotage des premières extrémités 30A des leviers est ainsi rendu impossible du fait que les secondes extrémités 30B de ces leviers sont écartées axialement des profils fixes d'escamotage 38, comme cela est représenté sur la figure 3.

Pour pourvoir séparer l'identifiant 12 du rotor 18, l'utilisateur doit effectuer des déplacements du rotor 18 dans des sens inverses à ceux décrits précédemment pour replacer ce rotor 18 dans sa position "stop" telle que représentée sur la figure 1.

Le dispositif de commande 14 selon l'invention permet, le cas échéant, de solidariser en rotation l'identifiant 12 avec le rotor 18 alors que ce rotor 18 est dans une position enfoncée opérationnelle.

En effet, dans ce cas, en l'absence de l'identifiant 12, les premières extrémités 30A des leviers de blocage font saillie à travers les moyens de couplage mâles 20 du rotor 18.

La première extrémité 30A de chaque levier de blocage est munie d'une rampe mobile d'escamotage 42 destinée à coopérer avec une forme complémentaire 44 de l'identifiant 12 pour permettre l'emboîtement des moyens de couplage mâles 20 et femelles 22.

La séparation de l'identifiant 12 d'avec le rotor 18 ne peut ensuite être réalisée qu'en replaçant ce rotor 18 dans la position "stop" telle que représentée sur la figure 1.

L'invention se limite au mode de réalisation décrit dans les revendications 1 à 14.

## Revendications

1. Dispositif de commande pour véhicule automobile du type comprenant :
- un stator (16),
- un rotor (18) monté déplaçable en rotation dans le stator (16), autour d'un axe g éométrique (X) lié à ce stator (16), entre une position de repos et une position opérationnelle,
- un organe amovible (12) de manoeuvre du rotor (18), et
- des moyens de couplage en rotation de l'organe de manoeuvre (12) avec le rotor (18) par emboîtement de moyens mâles (20) et femelles (22),
**caractérisé en ce que** les moyens de couplage mâles (20) sont portés par le, rotor (18) et les moyens de couplage femelles (22) sont portés par une extrémité de l'organe de manoeuvre (12) et **en ce que** les moyens de couplage mâles (20) et les moyens de couplage femelles (22) coopèrent entre eux par emboîtement axial, et **en ce que** l'organe de manoeuvre a une forme de boîtier plat formant un identifiant électronique.

2. Dispositif de commande selon la revendication 1, **caractérisé en ce qu'**il comprend des moyens (30) de blocage des moyens mâles (20) et femelles (22) en position emboîtée destinés à être activés lorsque le rotor (18) est en position opérationnelle, ces moyens de blocage (30) étant agencés, au moins en partie, dans les moyens de couplage mâles (20) et femelles (22).

3. Dispositif de commande selon la revendication 2, **caractérisé en ce que** les moyens de blocage comprennent au moins un levier de blocage (30), monté articulé dans le rotor (18), comprenant une première extrémité (30A) déplaçable entre une position escamotée dans les moyens de couplage mâles (20) et une position de blocage dans laquelle elle coopère avec une butée de blocage (34) ménagée dans les moyens de couplage femelles (22).

4. Dispositif de commande selon la revendication 3, **caractérisé en ce que** la première extrémité (30A) du levier de blocage (30) est sollicitée par une force de rappel élastique en position de blocage, ce levier de blocage (30) comprenant une seconde extrémité (30B) munie d'un profil (36) destiné, lorsque le rotor (18) est dans sa position de repos, à coopérer avec un profil fixe d'escamotage (38) ménagé dans le stator (16), de façon à maintenir la première extrémité (30A) du levier de blocage (30) en position escamotée à l'encontre de sa force de rappel.

5. Dispositif de commande selon la revendication 4, **caractérisé en ce que** le rotor (18) est déplaçable en translation dans le stator (16), sensiblement parallèlement à l'axe de rotation du rotor (18), entre des positions d'attente et enfoncée, la seconde extrémité (30B) du levier de blocage (30) étant, lorsque le rotor (18) est en position enfoncée, espacée axialement du profil fixe d'escamotage (38), de façon que la première extrémité (30A) du levier de blocage (30) est maintenue en position de blocage sous l'effet de sa force de rappel.

6. Dispositif de commande selon la revendication 5, **caractérisé en ce qu'**il comprend de plus des moyens (26, 28) d'immobilisation en translation du rotor (18) en position enfoncée opérationnelle.

7. Dispositif de commande selon la revendication 5 ou 6, **caractérisé en ce que** le profil fixe d'escamotage (38) ménagé dans le stator (16) comprend une rampe fixe d'escamotage (38R) et un palier fixe d'escamotage (38P) coopérant successivement avec des formes complémentaires du profil (36) de la seconde extrémité (30B) du levier lorsque le rotor (18) se déplace en translation de sa position enfoncée vers sa position d'attente.

8. Dispositif de commande selon l'une quelconque des revendications 3 à 7, **caractérisé en ce que** la première extrémité (30A) du levier de blocage (30) est munie d'une rampe mobile d'escamotage (42) destinée à coopérer avec une forme complémentaire (44) de l'organe de manoeuvre (12) lors de l'emboîtement des moyens de couplage mâles (20) et femelles (22) les uns dans les autres alors que le rotor (18) est en position opérationnelle.

9. Dispositif de commande selon l'une quelconque des revendications 3 à 8, **caractérisé en ce que** les moyens de couplage mâles (20) comprennent une saillie (24) prolongeant axialement le rotor (18), de section transversale sensiblement rectangulaire, dans laquelle est logée la première extrémité (30A) du levier de blocage (30), cette saillie axiale (24) étant destinée à coopérer par emboîtement avec les moyens de couplage femelles (22) de section transversale complémentaire.

10. Dispositif de commande selon l'une quelconque des revendications 3 à 9, **caractérisé en ce qu'**il comprend deux leviers de blocage (30) montés articulés dans le rotor (18), disposés sensiblement à 180° l'un de l'autre autour de l'axe de rotation du rotor (18).

11. Antivol électronique pour véhicule automobile, du type comprenant des moyens de commande de démarrage d'un moteur du véhicule, **caractérisé en ce que** les moyens de commande de démarrage comprennent un dispositif de commande (14) selon l'une quelconque des revendications 1 à 10.

12. Antivol électronique pour véhicule automobile, du type comprenant un dispositif électronique d'identification comportant un identifiant électronique (12), destiné à être porté par un utilisateur du véhicule autorisé, et une unité d'identification de cet utilisateur autorisé, embarquée à bord du véhicule, **caractérisé en ce que** l'identifiant électronique forme un organe de manoeuvre (12) pour un dispositif de commande (14) selon l'une quelconque des revendications 1 à 10.

13. Organe de manoeuvre amovible (12) d'un rotor (18) d'un dispositif de commande pour véhicule automobile selon la revendication 1, **caractérisé en ce qu**'il a une forme de boîtier plat et constitue un identifiant électronique et qu'il comporte des moyens de couplage femelles (22) portés par une de ses extrémités et destinés à coopérer par emboîtement axial avec des moyens de couplage mâles portés par le rotor (18).

14. Rotor (18) d'un dispositif de commande pour véhicule automobile selon la revendication 1, destiné à être monté déplaçable en rotation dans un stator (16) autour d'un axe géométrique lié à ce stator (16) entre une position de repos et une position opérationnelle, **caractérisé en ce qu'**il comprend des moyens de couplage mâles (20) destinés à coopérer par emboîtement axial avec des moyens de couplage femelles (22) portés par un organe de manoeuvre amovible (12) pour le rotor (18), ledit organe de manoeuvre (12) ayant une forme de boîtier plat et étant un identifiant électronique.

## Claims

1. Control device for motor vehicles of the type comprising:
- a stator (16),
- a rotor (18) mounted to be displaced rotationally in the stator (16), about a geometrical axis (X) associated with this stator (16), between an idle position and an operational position,
- a removable member (12) for operating the rotor (18), and
- rotational coupling means for coupling the operating member (12) with the rotor (18) by mating male (20) and female (22) means,
**characterized in that** the male coupling means (20) are supported by the rotor (18) and the female coupling means (22) are supported by one end of the operating member (12), and **in that** the male coupling means (20) and the female coupling means (22) cooperate with each other by axial mating, and **in that** the operating member is in the form of a flat module forming an electronic identifier.

2. Control device according to Claim 1, **characterized in that** it comprises means (30) of blocking male (20) and female (22) means in a mated position intended for activation when the rotor (18) is in the operational position, these blocking means (30) being arranged, at least partly, in the male (20) and female (22) coupling means.

3. Control device according to Claim 2, **characterized in that** the blocking means comprise at least one blocking lever (30), mounted articulated in the rotor (18), comprising a first end (30A) that can be displaced between a retracted position in the male coupling means (20) and a blocking position in which it cooperates with a blocking abutment (34) provided in the female coupling means (22).

4. Control device according to Claim 3, **characterized in that** the first end (30A) of the blocking lever (30) is stressed by an elastic return force to the blocking position, this blocking lever (30) comprising a second end (30B) provided with a profile (36) intended, when the rotor (18) is in its idle position, to cooperate with a fixed retraction profile (38) provided in the stator (16), so as to maintain the first end (30A) of the blocking lever (30) in the retracted position against its return force.

5. Control device according to Claim 4, **characterized in that** the rotor (18) can be displaced translationally in the stator (16), roughly parallel to the axis of rotation of the rotor (18), between waiting and depressed positions, the second end (30B) of the blocking lever (30) being, when the rotor (18) is in the depressed position, axially spaced apart from the fixed retraction profile (38), so that the first end (30A) of the blocking lever (30) is held in the blocking position under the effect of its return force.

6. Control device according to Claim 5, **characterized in that** it also comprises means (26, 28) of translationally immobilizing the rotor (18) in the operational depressed position.

7. Control device according to Claim 5 or 6, **characterized in that** the fixed retraction profile (38) provided in the stator (16) comprises a fixed retraction ramp (38R) and a fixed retraction level (38P) that successively cooperate with complementary shapes of the profile (36) of the second end (30B) of the lever when the rotor (18) is translationally displaced from its depressed position to its waiting position.

8. Control device according to any one of Claims 3 to 7, **characterized in that** the first end (30A) of the blocking lever (30) is provided with a moving retraction ramp (42) intended to cooperate with a complementary shape (44) of the operating member (12) during the mating of the male (20) and female (22) coupling means together when the rotor (18) is in the operational position.

9. Control device according to any one of Claims 3 to 8, **characterized in that** the male coupling means (20) comprise a protuberance (24) axially prolonging the rotor (18), with a substantially rectangular transversal section, which houses the first end (30A) of the blocking lever (30), this axial protuberance (24) being intended to cooperate by mating with the female coupling means (22) of complementary transversal section.

10. Control device according to any one of Claims 3 to 9, **characterized in that** it comprises two blocking levers (30) mounted articulated in the rotor (18), arranged roughly at 180° to one another about the rotation axis of the rotor (18).

11. Electronic antitheft device for motor vehicles, of the type comprising vehicle engine starting control means, **characterized in that** the starting control means comprise a control device (14) according to any one of Claims 1 to 10.

12. Electronic antitheft device for motor vehicles, of the type comprising an electronic identification device comprising an electronic identifier (12), intended to be worn by an authorized user of the vehicle, and a unit identifying this authorized user, on board the vehicle, **characterized in that** the electronic identifier forms an operating member (12) for a control device (14) according to any one of Claims 1 to 10.

13. Removable operating member (12) for a rotor (18) of a control device for motor vehicles according to Claim 1, **characterized in that** it has a flat module shape and forms an electronic identifier, and **in that** it comprises female coupling means (22) supported by one of its ends and intended to cooperate by axial mating with male coupling means supported by the rotor (18).

14. Rotor (18) of a control device for motor vehicles according to Claim 1, intended to be mounted so that it can be rotationally displaced in a stator (16), about a geometrical axis associated with this stator (16), between an idle position and an operational position, **characterized in that** it comprises male coupling means (20) intended to cooperate by axial mating with female coupling means (22) supported by a removable operating member (12) for the rotor (18), said operating member (12) having a flat module shape and being an electronic identifier.

## Patentansprüche

1. Steuervorrichtung für ein Kraftfahrzeug von der Art, die enthält:
- einen Stator (16),
- einen Rotor (18), der im Stator (16) um eine mit diesem Stator (16) verbundene geometrische Achse (X) zwischen einer Ruhestellung und einer Betriebsstellung drehbeweglich montiert ist,
- ein entfernbares Betätigungselement (12) des Rotors (18), und
- Einrichtungen zur Drehkopplung des Betätigungselements (12) mit dem Rotor (18) durch Ineinanderstecken von Einsteckeinrichtungen (20) und Aufnahmeeinrichtungen (22),
**dadurch gekennzeichnet, dass** die Einsteck-Koppeleinrichtungen (20) vom Rotor (18) und die Aufnahme-Koppeleinrichtungen (22) von einem Ende des Betätigungselements (12) getragen werden, und die Einsteck-Koppeleinrichtungen (20) und die Aufnahme-Koppeleinrichtungen (22) durch axiales Ineinanderstecken zusammenwirken, und dass das Betätigungselement die Form eines flachen Gehäuses hat, das eine elektronische Kennung bildet.

2. Steuervorrichtung nach Anspruch 1, **dadurch gekennzeichnet, dass** sie Einrichtungen (30) zum Blockieren der Einsteckeinrichtungen (20) und der Aufnahmeeinrichtungen (22) in der ineinandergesteckten Stellung enthält, die dazu bestimmt sind, aktiviert zu werden, wenn der Rotor (18) in der Betriebsstellung ist, wobei diese Blockiereinrichtungen (30) zumindest zum Teil in den Einsteck- (20) und Aufnahmekoppeleinrichtungen (22) angeordnet sind.

3. Steuervorrichtung nach Anspruch 2, **dadurch gekennzeichnet, dass** die Blockiereinrichtungen mindestens einen Blockierhebel (30) enthalten, der angelenkt im Rotor (18) montiert ist und ein erstes Ende (30A) aufweist, das zwischen einer in die Einsteck-Koppeleinrichtungen (20) eingezogenen Stellung und einer Blockierstellung verschiebbar ist, in der es mit einem Blockieranschlag (34) zusammenwirkt, der in den Aufnahme-Koppeleinrichtungen (22) angeordnet ist.

4. Steuervorrichtung nach Anspruch 3, **dadurch gekennzeichnet, dass** das erste Ende (30A) des Blockierhebels (30) von einer elastischen Rückstellkraft in die Blockierstellung beaufschlagt wird, wobei dieser Blockierhebel (30) ein zweites Ende (30B) aufweist, das mit einem Profil (36) versehen ist, welches dazu bestimmt ist, wenn der Rotor (18) in seiner Ruhestellung ist, mit einem im Stator (16) angeordneten, festen Einziehprofil (38) zusammenzuwirken, um das erste Ende (30A) des Blockierhebels (30) gegen seine Rückstellkraft in der eingezogenen Stellung zu halten.

5. Steuervorrichtung nach Anspruch 4, **dadurch gekennzeichnet, dass** der Rotor (18) im Stator (16) im Wesentlichen parallel zur Drehachse des Rotors (18) zwischen einer Wartestellung und einer eingedrückten Stellung translationsbeweglich ist, wobei das zweite Ende (30B) des Blockierhebels (30), wenn der Rotor (18) in der eingedrückten Stellung ist, axial einen Abstand zum festen Einziehprofil (38) hat, so dass das erste Ende (30A) des Blockierhebels (30) unter der Wirkung seiner Rückstellkraft in der Blockierstellung gehalten wird.

6. Steuervorrichtung nach Anspruch 5, **dadurch gekennzeichnet, dass** sie außerdem Einrichtungen (26, 28) zur Translationsblockierung des Rotors (18) in der eingedrückten Betriebsstellung enthält.

7. Steuervorrichtung nach Anspruch 5 oder 6, **dadurch gekennzeichnet, dass** das im Stator (16) angeordnete, feste Einziehprofil (38) eine feste Einziehrampe (38R) und ein festes Einziehlager (38P) enthält, die nacheinander mit komplementären Formen des Profils (36) des zweiten Endes (30B) des Hebels zusammenwirken, wenn der Rotor (18) sich von seiner eingedrückten Stellung in seine Wartestellung translationsverschiebt.

8. Steuervorrichtung nach einem der Ansprüche 3 bis 7, **dadurch gekennzeichnet, dass** das erste Ende (30A) des Blockierhebels (30) mit einer beweglichen Einziehrampe (42) versehen ist, die dazu bestimmt ist, mit einer komplementären Form (44) des Betätigungselements (12) beim Ineinanderstecken der Einsteck-Koppeleinrichtungen (20) und der Aufnahme-Koppeleinrichtungen (22) zusammenzuwirken, während der Rotor (18) in der Betriebsstellung ist.

9. Steuervorrichtung nach einem der Ansprüche 3 bis 8, **dadurch gekennzeichnet, dass** die Einsteck-Koppeleinrichtungen (20) einen den Rotor (18) axial verlängernden Vorsprung (24) von im Wesentlichen rechteckigem Querschnitt enthalten, in den das erste Ende (30A) des Blockierhebels (30) eingesetzt ist, wobei dieser axiale Vorsprung (24) dazu bestimmt ist, durch Ineinanderstecken mit den Aufnahme-Koppeleinrichtungen (22) mit komplementärem Querschnitt zusammenzuwirken.

10. Steuervorrichtung nach einem der Ansprüche 3 bis 9, **dadurch gekennzeichnet, dass** sie zwei im Rotor (18) angelenkt montierte Blockierhebel (30) enthält, die im Wesentlichen in 180° Abstand zueinander um die Drehachse des Rotors (18) angeordnet sind.

11. Elektronische Diebstahlsicherung für ein Kraftfahrzeug von der Art, die Einrichtungen zur Startsteuerung eines Motors des Fahrzeugs enthält, **dadurch gekennzeichnet, dass** die Startsteuereinrichtungen eine Steuervorrichtung (14) nach einem der Ansprüche 1 bis 10 enthalten.

12. Elektronische Diebstahlsicherung für ein Kraftfahrzeug von der Art, die eine elektronische Kennung (12), die dazu bestimmt ist, von einem berechtigten Nutzer des Fahrzeugs getragen zu werden, und eine Identifikationseinheit dieses berechtigten Nutzers aufweist, **dadurch gekennzeichnet, dass** die elektronische Kennung ein Betätigungsorgan (12) für eine Steuereinrichtung (14) nach einem der Ansprüche 1 bis 10 bildet.

13. Entfernbares Betätigungselement (12) eines Rotors (18) einer Steuervorrichtung für ein Kraftfahrzeug nach Anspruch 1, **dadurch gekennzeichnet, dass** es die Form eines flachen Gehäuses hat und eine elektronische Kennung bildet, und dass es Aufnahme-Koppeleinrichtungen (22) aufweist, die von einem seiner Enden getragen werden und dazu bestimmt sind, durch axiales Ineinanderstecken mit vom Rotor (18) getragenen Einsteck-Koppeleinrichtungen zusammenzuwirken.

14. Rotor (18) einer Steuervorrichtung für ein Kraftfahrzeug nach Anspruch 1, dazu bestimmt, in einem Stator (16) um eine mit diesem Stator (16) verbundene geometrische Achse zwischen einer Ruhestellung und einer Betriebsstellung drehbeweglich montiert zu werden, **dadurch gekennzeichnet, dass** er Einsteck-Koppeleinrichtungen (20) enthält, die dazu bestimmt sind, durch axiales Ineinanderstecken mit Aufnahme-Koppeleinrichtungen (22) zusammenzuwirken, die von einem entfernbaren Betätigungselement (12) für den Rotor (18) getragen werden, wobei das Betätigungselement (12) die Form eines flachen Gehäuses hat und eine elektronische Kennung ist.
